# FASCICULE DE BREVET EUROPEEN

(11) **EP 2 558 742 B1**
(45) Date de publication et mention de la délivrance du brevet: **16.03.2016**
(21) Numéro de dépôt: 11714333.9
(22) Date de dépôt: 15.04.2011
(51) Int. Cl.: F16D 57/06, B64C 25/24

(54) **ACTIONNEUR ELECTROMECANIQUE A REGULATION HYDRAULIQUE, ET ATTERRISSEUR EQUIPE D'UN TEL ACTIONNEUR POUR SA MANOEUVRE**
HYDRAULISCH GEREGELTER ELEKTROMAGNETISCHER AKTUATOR UND LANDEGESTELL MIT SOLCH EINEM AKTUATOR ZU DESSEN STEUERUNG
HYDRAULICALLY REGULATED ELECTROMAGNETIC ACTUATOR, AND LANDING GEAR FITTED WITH SUCH AN ACTUATOR FOR CONTROLLING SAME

(30) Priorité: 15.04.2010 FR 1052885
(43) Date de publication de la demande: 20.02.2013
(73) Titulaire: Messier-Bugatti-Dowty, 78140 Vélizy-Villacoublay (FR)
(72) Inventeur: KELLER, Nicolas, F-94140 Alfortville (FR); CAMPBELL, Edouard, F-91600 Savigny sur Orge (FR); DUBOIS, Sébastien, F-91300 Massy (FR); DE PINDRAY, Albert, F-78114 Magny les Hameaux (FR)
(74) Mandataire: Parzy, Benjamin Alain
(86) Numéro de dépôt international: PCT/EP2011/056042
(87) Numéro de publication internationale: WO 2011/128441

(56) Documents cités:
- DE-A1- 19 849 756
- DE-A1-102005 061 364
- US-A- 2 429 425

## Description

La présente invention concerne un actionneur électromécanique à régulation hydraulique, ainsi qu'un atterrisseur équipé d'un tel actionneur pour sa manoeuvre.

Bien que particulièrement prévu pour une application dans le domaine aéronautique, l'actionneur de l'invention pourra également être utilisé dans d'autres applications, notamment dans celles dans lesquelles la rotation de l'arbre de sortie doit être également contrôlée en cas de non alimentation ou de dysfonctionnement du moteur électrique.

### ARRIERE PLAN DE L'INVENTION

On connaît des atterrisseurs d'aéronefs dont la manoeuvre entre une position déployée et une position rentrée est effectuée au moyen d'un actionneur de type hydraulique, par exemple un vérin. Bien souvent, on laisse l'atterrisseur descendre sous l'effet de la gravité, le vérin étant utilisé comme un régulateur pour limiter la vitesse de descente de l'atterrisseur. A cet effet, on provoque un laminage du fluide expulsé de la chambre du vérin dont son volume se réduit lors de la descente. Ce freinage est automatique et se produit donc même si la génération hydraulique devait tomber en panne, ce qui représente une grande sécurité.

On utilise, également, notamment sur les aéronefs légers, des actionneurs électromécaniques rotatifs qui coopèrent avec l'atterrisseur soit directement au niveau d'un pivot de l'atterrisseur, soit indirectement par l'intermédiaire d'une bielle attelée entre une manivelle solidaire de l'actionneur et le caisson de l'atterrisseur. Encore une fois, la descente de l'atterrisseur se fait sous l'effet de la gravité, et l'actionneur électromécanique est utilisé comme régulateur de descente. A cet effet on alimente le moteur électrique de l'actionneur pour qu'il exerce un couple résistant, régulant ainsi la vitesse de descente de l'atterrisseur.

Toutefois en cas de non alimentation ou de dysfonctionnement du moteur électrique, aucun élément du moteur ne permet de freiner et donc de contrôler la descente de l'atterrisseur, ce qui peut se révéler problématique puisqu'en cas de descente non maîtrisée de l'atterrisseur, il y a un risque important de dommage de ce dernier lorsqu'il arrive en fin de course.

Pour limiter ce risque, il est envisageable d'équiper l'actionneur de plusieurs moteurs électriques de manière à réduire le risque de défaillance d'un moteur de l'actionneur, toutefois, doubler ou tripler le nombre de moteur nécessaire à la commande de l'actionneur engendrerait une augmentation considérable du poids et du volume de l'actionneur. Par ailleurs, le problème resterait entier en cas de panne électrique générale.

Le document US 2 429 425 A montre un actionneur électromécanique d'après le préambule de la revendication 1.

### OBJET DE L'INVENTION

La présente invention a pour objet de présenter un actionneur électromécanique permettant une régulation passive de la vitesse lorsque l'actionneur est entraîné par une cause extérieure.

### RESUME DE L'INVENTION

A cet effet l'invention concerne un actionneur électromécanique comportant un moteur électrique pour entraîner un arbre en rotation par l'intermédiaire d'un réducteur et des moyens de régulation permettant un contrôle de la vitesse de rotation de l'arbre. Selon l'invention, les moyens de régulation sont passifs et comportent un organe de freinage, disposé entre une sortie du réducteur et l'arbre à entraîner, ledit organe de freinage étant agencé pour assurer deux niveaux de freinage différents selon le sens de rotation de l'arbre.

Ainsi, si le moteur électrique ne fonctionne pas, le dispositif d'entraînement continue à freiner l'arbre de sorte que la vitesse de rotation de l'arbre est toujours maîtrisée.

De plus, les moyens de freinage opposent une résistance au déplacement de l'arbre qui diffère en fonction de son sens de rotation. Cette caractéristique est particulièrement intéressante dans le cas d'une application à un actionneur d'atterrisseur pour lequel la résistance permettant le contrôle de la descente pourra être choisie relativement élevée tandis que la résistance à opposer lors de la remontée de l'atterrisseur peut être choisie limitée, voire nulle, pour réduire la quantité d'énergie nécessaire à la remontée.

Selon un mode préféré de réalisation de l'invention, l'organe de freinage est de type hydraulique et comporte des moyens de transvasement de fluide d'une chambre à une autre sous l'effet de la rotation de l'arbre de sortie au travers d'un organe de laminage sélectif qui, selon le sens de rotation de l'actionneur, oppose deux résistances distinctes au transvasement du fluide d'une chambre à l'autre.

### BREVE DESCRIPTION DES DESSINS

La présente invention sera mieux comprise à la lecture d'un exemple détaillé de réalisation en référence aux dessins annexés, fournis à titre d'exemple non limitatif, parmi desquels :
- la figure 1 représente une vue en coupe longitudinale d'un actionneur conforme à l'invention ;
- la figure 2 est une coupe selon la ligne II-II de la figure 1, au niveau de l'étage de régulation de l'actionneur représenté à la figure 1,
- la figure 3 représente un exemple de réalisation du circuit hydraulique de l'actionneur des figures 1 et 2 ;
- les figures 4 et 5 représentent de manière schématique deux atterrisseurs équipés d'un actionneur selon l'invention pour assurer leur manoeuvre.

### DESCRIPTION DETAILLEE DE L'INVENTION

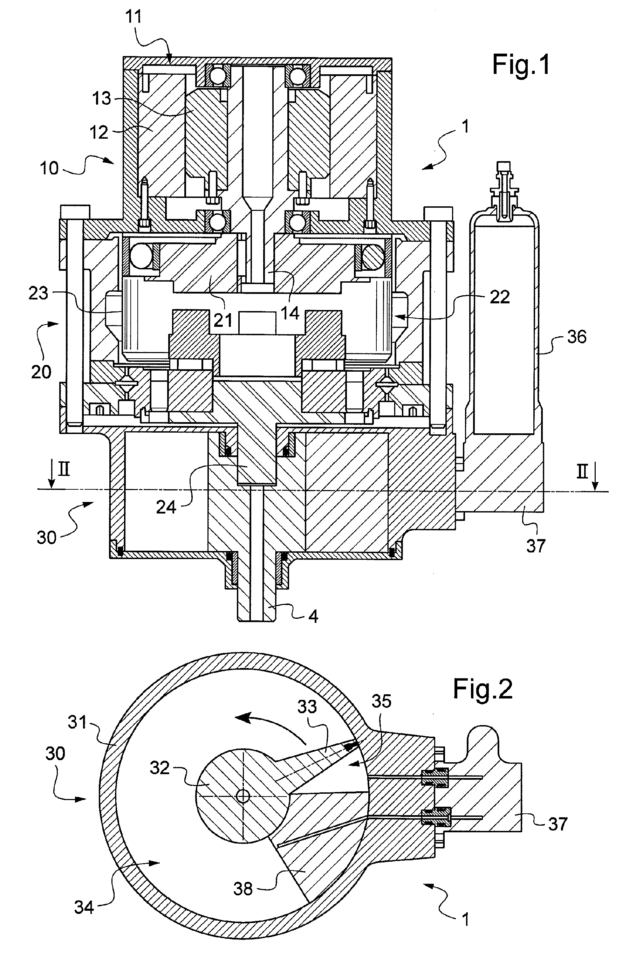

En référence à la figure 1, l'actionneur 1 de l'invention comporte un étage d'entraînement 10, un étage de réduction 20, ainsi qu'un étage de régulation 30. L'étage d'entraînement 10 comporte un moteur électrique 11 dont on aperçoit le stator 12 et le rotor 13 qui comporte un arbre de sortie 14 pénétrant dans l'étage de réduction 20 pour coopérer avec l'organe d'entrée 21 d'un réducteur, ici un réducteur de type « harmonic drive » 22 à cloche déformable 23. Ce réducteur est bien connu pour présenter un rapport de réduction important. L'arbre de sortie 24 associé à la cloche déformable 23 pénètre dans l'étage de régulation 30 pour coopérer avec un organe de freinage qui comporte un arbre de sortie 4 qui constitue l'arbre de sortie de l'actionneur 1.

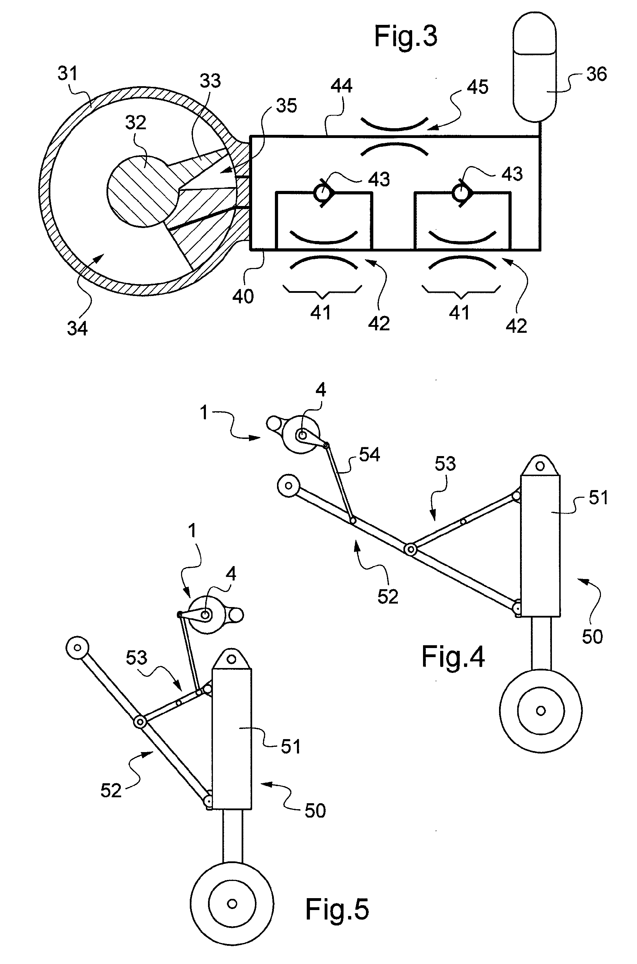

Comme cela est visible sur la figure 2, l'organe de freinage comporte un carter 31 de section circulaire dans lequel un rotor 32 muni d'une palette 33 tourne en étant entraîné par l'arbre de sortie 24 du réducteur 22. Un secteur fixe 38 s'étend dans le carter 31 pour définir avec le rotor 32 et la palette 33 deux chambres 34 et 35 dont le volume varie avec la rotation du rotor 32 et de la palette 33 de sorte que lorsque le volume de l'une des chambres augmente, le volume de l'autre des chambres diminue. Les deux chambres 34, 35 sont mises en communication fluidique avec un accumulateur 36 (visible à la figure 1) par l'intermédiaire d'un bloc hydraulique 37 comportant un certain nombre de composants hydrauliques qui sont maintenant détaillés en relation avec la figure 3 sur laquelle les communications fluidiques sont représentées par des traits épais.

La chambre 34 est connectée par une première branche fluidique 40 à l'accumulateur 36. La première branche fluidique 40 comporte deux composants hydrauliques 41 placés en série et comportant chacun un restricteur 42 associé à un clapet anti-retour 43 obligeant le fluide à passer par les restricteurs 42 lorsque le fluide transite de la chambre 34 vers l'accumulateur 36. La chambre 35 est quant à elle connectée par une deuxième branche fluidique 44 à l'accumulateur 36. La deuxième branche fluidique 44 comporte un restricteur de régulation 45.

Le fonctionnement de l'organe de freinage est le suivant. Lorsque, sous l'action du moteur électrique 11 ou d'une cause externe, la palette 33 tourne dans le sens indiqué par la flèche sur la figure 2 qui est celui pour lequel la chambre 34 voit son volume diminuer, du fluide est expulsé de la chambre 34 vers l'accumulateur 36 par la première branche fluidique 40 en passant par les restricteurs 42 qui exercent une forte résistance au passage du fluide, et contribue donc à freiner la rotation de la palette 33, et, en conséquence, la rotation de l'arbre de sortie 4 de l'actionneur. En parallèle, du fluide transite de l'accumulateur 36 vers la chambre 35 en passant par le restricteur 45 de la deuxième branche fluidique 44. Cependant, ce restricteur 45 est suffisamment ouvert et la pression de l'accumulateur 36 est suffisamment importante pour qu'aucune cavitation ne soit observée dans la chambre 35.

Lorsque la palette tourne dans l'autre sens, c'est la chambre 35 qui voit son volume diminuer, et du fluide est expulsé vers l'accumulateur 36 via le restricteur 45 de la deuxième branche fluidique 44 qui oppose une légère résistance, permettant ainsi une régulation de la vitesse de rotation de l'arbre de sortie 4. En parallèle, du fluide est expulsé de l'accumulateur 36 vers la chambre 34 en passant par les clapets anti-retours 43 de la deuxième branche fluidique, qui sont passants dans ce sens, de sorte que les restricteurs 42 sont shuntés.

Ainsi, le transvasement d'une chambre à l'autre (par l'intermédiaire ici de l'accumulateur) se fait en forçant le fluide à passer au travers d'organes de laminage qui laminent de façon sélective (fort laminage dans un sens, laminage faible ou quasi-nul dans l'autre sens), de sorte que l'organe de freinage offre deux niveaux de freinage distincts, selon le sens de rotation de l'arbre de sortie 4 de l'actionneur. Ce freinage est purement passif, et intervient notamment lorsque l'arbre de sortie 4 est entraîné par une cause externe.

Un tel actionneur peut être avantageusement utilisé pour la manoeuvre d'un atterrisseur entre sa position déployée et sa position rentrée. Il peut être disposé selon un axe d'articulation du caisson pour attaquer directement celui-ci, ou encore disposé parallèlement à l'axe d'articulation du caisson de l'atterrisseur pour attaquer celui-ci via un secteur denté, ou encore être attelé au caisson de l'atterrisseur par une bielle reliée à une manivelle entraînée par l'actionneur. Bien évidemment, on fera en sorte que le sens de rotation pour lequel un freinage plus important est généré corresponde à celui que l'atterrisseur impose à l'actionneur lorsque l'atterrisseur descend vers la position déployée sous l'effet de la gravité ou du vent relatif. Ce freinage purement passif permet de réguler la vitesse de chute de l'actionneur, de sorte que même une panne d'alimentation électrique ou une rupture de l'organe de transmission empêchant le moteur électrique d'exercer un couple résistant ne compromet pas le freinage ainsi effectué. En variante, et comme cela est illustré aux figures 4 et 5, l'actionneur de l'invention peut être attelé à l'un des éléments du contreventement, pour autant que l'élément concerné a un déplacement monotone sans rebroussement lorsque l'atterrisseur passe de la position déployée à la position rentrée. Sur ces figures, on reconnaît un atterrisseur 50 dont le caisson 51 est articulé sur la structure d'un aéronef. Une contrefiche briseuse 52 comportant deux bras articulés entre eux est articulée d'une part sur la structure de l'aéronef et d'autre part sur le caisson. Un organe de verrouillage 53, comportant ici également deux bras articulés s'étend entre la contrefiche 52 et la structure de l'aéronef, comme illustré à la figure 4, ou le caisson de l'atterrisseur, comme illustré à la figure 5. Sur la figure 4, l'actionneur 1 de l'invention est attelé à l'un des bras de la contrefiche 52 au moyen d'une bielle 54 qui coopère avec une manivelle 55 entraînée par l'arbre de sortie 4 de l'actionneur 1.

Pour remonter l'atterrisseur vers sa position rentrée, il suffira d'alimenter le moteur électrique 11 de l'actionneur pour que celui-ci exerce un couple provoquant la remontée de l'atterrisseur. On remarquera que dans l'agencement de la figure 4, il convient de prévoir un actionneur de déverrouillage (non représenté) pour agir sur l'organe de verrouillage 53 et déverrouiller la contrefiche 52. Au contraire, dans l'agencement de la figure 5, le même actionneur déverrouille la contrefiche et entraîne l'atterrisseur vers sa position rentrée.

L'invention n'est bien sûr pas limitée à ce qui vient d'être décrit, mais englobe au contraire toute variante entrant dans le cadre défini par les revendications. En particulier, bien que l'organe de freinage de l'étage de régulation décrit ici est du type à palette, on pourra utiliser tout autre organe de freinage, du moment que cet organe exerce des niveaux de freinage distincts selon le sens de rotation de l'actionneur, l'un des niveaux de freinage pouvant le cas échéant être nul ou négligeable par rapport à l'autre niveau de freinage.

## Revendications

1. Actionneur électromécanique comportant un moteur électrique (11) pour entraîner un arbre de sortie (4) en rotation par l'intermédiaire d'un réducteur (20) et des moyens de régulation (30) passifs permettant un contrôle de la vitesse de rotation de l'arbre de sortie, et comportant un organe de freinage (30), disposé entre une sortie du réducteur et l'arbre de sortie à entraîner, ledit organe de freinage étant agencé pour assurer deux niveaux de freinage différents selon le sens de rotation de l'arbre, **caractérisé en ce que** l'organe de freinage est de type hydraulique et comporte des moyens de transvasement (33) de fluide entre deux chambres (34, 35) sous l'effet de la rotation de l'arbre de sortie au travers d'un organe de laminage sélectif (41) qui, selon le sens de rotation de l'actionneur, oppose deux résistances distinctes au transvasement du fluide d'une chambre à l'autre.

2. Actionneur selon la revendication 1, dans lequel l'organe de freinage comporte un carter cylindrique (31) dans lequel un secteur fixe (38) et une palette rotative (33) s'étendent pour définir les deux chambres (34, 35) et provoquer le transvasement de fluide d'une chambre à l'autre lors de sa rotation.

3. Actionneur selon la revendication 1, dans lequel le fluide est transvasé d'une chambre à l'autre en transitant par un accumulateur (36).

4. Actionneur selon la revendication 3, dans lequel l'une des chambres communique avec l'accumulateur par une branche fluidique comportant au moins un organe de laminage (41) comportant un restricteur (42) en parallèle d'un clapet anti-retour (43) forçant le fluide à passer par le restricteur lorsqu'il transite de la chambre à l'accumulateur, mais shuntant le restricteur lorsque le fluide transite de l'accumulateur vers la chambre.

5. Atterrisseur d'aéronef comportant un actionneur selon l'une des revendications précédentes pour sa manoeuvre entre une position rentrée et une position déployée, l'actionneur étant agencé de sorte que lorsque son arbre de sortie est entraîné par la descente de l'atterrisseur vers la position déployée, l'organe de freinage exerce le niveau de freinage le plus important.

6. Atterrisseur selon la revendication 5, dans lequel l'arbre de sortie de l'actionneur est attelé à un élément de contreventement (52 ; 53) de l'atterrisseur.

## Patentansprüche

1. Elektromechanischer Aktor, der einen Elektromotor (11) umfasst, um eine Abtriebswelle (4) über ein Reduktionsgetriebe (20) und passive Regelungsmittel (30), die eine Steuerung der Drehgeschwindigkeit der Abtriebswelle ermöglichen, drehend anzutreiben, sowie ein Bremsorgan (30), das zwischen einem Ausgang des Reduktionsgetriebes und der anzutreibenden Abtriebswelle angeordnet ist, wobei das genannte Bremsorgan so ausgebildet ist, dass es je nach Drehrichtung der Welle zwei verschiedene Bremsniveaus sicherstellt, **dadurch gekennzeichnet, dass** das Bremsorgan hydraulischer Art ist und Fluidumfüllmittel (33) zum Umfüllen von Fluid zwischen zwei Kammern (34, 35) unter der Wirkung der Drehung der Abtriebswelle durch ein selektives Drosselorgan (41) umfasst, das je nach Drehrichtung des Aktors dem Umfüllen des Fluids von einer Kammer in die andere zwei unterschiedliche Widerstände entgegensetzt.

2. Aktor nach Anspruch 1, wobei das Bremsorgan ein zylindrisches Gehäuse (31) umfasst, in dem sich ein ortsfester Sektor (38) und eine sich drehende Schaufel (33) erstrecken, um die beiden Kammern (34, 35) zu definieren und das Umfüllen von Fluid von einer Kammer in die andere während der Drehung der Schaufel zu bewirken.

3. Aktor nach Anspruch 1, wobei das Fluid von einer Kammer in die andere umgefüllt wird, während es durch einen Akkumulator (36) befördert wird.

4. Aktor nach Anspruch 3, wobei eine der Kammern mit dem Akkumulator über einen Fluidzweig kommuniziert, der mindestens ein Drosselungsorgan (41) umfasst, das eine Drossel (42) parallel zu einem Rückschlagventil (43) umfasst, welches das Fluid zwingt, durch die Drossel hindurchzuströmen, wenn es von der Kammer in den Akkumulator befördert wird, jedoch die Drossel shuntet, wenn das Fluid von dem Akkumulator in Richtung der Kammer befördert wird.

5. Flugzeugfahrwerk, das einen Aktor nach einem der vorhergehenden Ansprüche für seine Bewegung zwischen einer eingefahrenen Stellung und einer ausgefahrenen Stellung umfasst, wobei der Aktor derart ausgebildet ist, dass, wenn seine Abtriebswelle durch das Absenken des Fahrwerks in die ausgefahrene Stellung angetrieben wird, das Bremsorgan das höchste Bremsniveau ausübt.

6. Fahrwerk nach Anspruch 5, wobei die Abtriebswelle des Aktors an einem Aussteifungselement (52; 53) des Fahrwerks gekoppelt ist.

## Claims

1. Electromechanical actuator comprising an electric motor (11) for driving an output shaft (4) in rotation via a reduction gear (20) and passive regulation means (30) allowing for control of the speed of rotation of the output shaft, and comprising a braking member (30), arranged between an output of the reduction gear and the output shaft to be driven, said braking member being arranged to ensure two different braking levels depending on the direction of rotation of the shaft, **characterized in that** the braking member is of hydraulic type and comprises means (33) for transferring fluid between two chambers (34, 35), under the effect of the rotation of the output shaft through a selective drawing member (41) which, depending on the direction of rotation of the actuator, opposes two distinct resistances to the transfer of the fluid from one chamber to the other.

2. Actuator according to Claim 1, in which the braking member comprises a cylindrical casing (31) in which a fixed segment (38) and a rotating paddle (33) extend to define the two chambers (34, 35) and provoke the transfer of fluid from one chamber to the other during its rotation.

3. Actuator according to Claim 1, in which the fluid is transferred from one chamber to the other by passing through an accumulator (36).

4. Actuator according to Claim 3, in which one of the chambers communicates with the accumulator via a fluidic branch comprising at least one drawing member (41) comprising a restrictor (42) in parallel with a non-return valve (43) forcing the fluid to pass through the restrictor when it passes through the chamber to the accumulator, but shunting the restrictor when the fluid passes from the accumulator to the chamber.

5. Aircraft landing gear comprising an actuator according to one of the preceding claims for manoeuvring between a retracted position and a deployed position, the actuator being arranged so that, when its output shaft is driven by the lowering of the landing gear to the deployed position, the braking member exerts the greatest braking level.

6. Landing gear according to Claim 5, in which the output shaft of the actuator is coupled to a bracing element (52; 53) of the landing gear.
